# FASCICULE DE BREVET EUROPEEN

(11) **EP 1 543 089 B1**
(45) Date de publication et mention de la délivrance du brevet: **07.04.2010**
(21) Numéro de dépôt: 03798232.9
(22) Date de dépôt: 26.09.2003
(51) Int. Cl.: C09J 151/06

(54) **LIANT DE COEXTRUSION POUR POLYESTER A BASE DE POLYETHYLENE METALLOCENE ET LLDPE COGREFFES ET DE POLYETHYLENE METALLOCENE**
BINDEMITTEL ZUR KOEXTRUSION MIT POLYESTER AUF DER BASIS VON COGEPFROPFTEM UND UNMODIFIZIERTEM METALLOCEN POLYETHYLENE
COEXTRUSION BINDER FOR POLYSTER BASED ON CO-GRAFTED LLDPE AND METALLOCENE POLYETHYLENE AND METALLOCENE POLYETHYLENE

(30) Priorité: 27.09.2002 FR 0211992
(43) Date de publication de la demande: 22.06.2005
(73) Titulaire: ARKEMA FRANCE, 92700 Colombes (FR)
(72) Inventeur: PRADEL, Jean-Laurent, F-27300 Bernay (FR); CHOPINEZ, Fabrice 40 bis, rue de Pannette, F-27000 Evreux (FR); RAULINE, Damien, 27270 Saint-Quentin des Isles (FR); ROBERT, Patrice, F-27470 Serquigny (FR)
(74) Mandataire: Lhoste, Catherine
(86) Numéro de dépôt international: PCT/FR2003/002850
(87) Numéro de publication internationale: WO 2004/029173

(56) Documents cités:
- EP-A- 1 022 310
- EP-A- 1 136 536

## Description

La présente invention concerne un liant de coextrusion adhérant sur des couches de polyester et comprenant un mélange de polyéthylène métallocène, abrégé PEm dans la suite du texte, de LLDPE non métallocène, tous les deux cogreffés et de polyéthylène métallocène non greffé. L'invention concerne également la structure multicouche comprenant ce liant et les objets comprenant une telle structure.

Jusqu'à présent les colles pour lier les couches ou films en PE ou en polyester étaient à base de copolymères éthylène/(méth)acrylate d'alkyle et/ou éthylène/ acétate de vinyle. Mais ces colles ont pour inconvénients de dégager une forte odeur posant des problèmes d'utilisation. D'autre part, leur pouvoir d'adhésion n'est pas spécialement très performant et en tout cas pas dans la durée. Ces colles ont également pour inconvénients de ne pas permettre l'adhésion des couches de polyester ou de polyoléfine sur des couches d'EVOH (matériau barrière).

Le document FR 2806734 (EP 1136536) de la demanderesse divulgue une composition comprenant du PE métallocène et du LLDPE non métallocène cogreffés avec de l'acide carboxylique insaturé ou son dérivé ladite composition étant diluée dans du PE ou un élastomère. Le PE pouvant être dans cette demande un PE homopolymère ou copolymère avec pour comonomère , dans ce cas, une alphaoléfine et il peut être un PE de type HDPE (PE haute densité), LDPE (PE basse densité), LLDPE (PE basse densité linéaire), VLDPE (PE très basse densité) ou un PE métallocène. Aucunes informations ni exemples ne sont donnés sur le diluant lorsque celui-ci s'avère être du PE métallocène.

La demanderesse a maintenant trouvé un liant ne posant plus de problèmes olfactif comme les liants de l'ancienne vénération et présentant un pouvoir collant important dès son application allant en augmentant jusqu'à atteindre un plateau. De plus, cet adhésif adhère aux couches d'EVOH (matériau barrière) contrairement aux adhésifs de type éthylène/(méth)acrylate d'alkyle ou éthylène/acétate de vinyle.

Ce liant présente des caractéristiques d'adhésion que ne décrivent pas les autres documents de l'art antérieur. Ces caractéristiques sont décrites plus loin dans le présent document.

On récupère le liant sous forme de granulés à la sortie d'une extrudeuse ou de tout autre dispositif équivalent, la demanderesse a trouvé que cette granulation était beaucoup plus facile que pour les liants de type Ethylène/acétate de vinyle greffés.

Ce liant permet donc l'élaboration de structures variées comprenant entre autre une couche de polyéthylène, une couche de polyester et/ou une couche de matériau barrière. L'homme de l'art adaptera le choix du polyester en fonction de la méthode de transformation choisie.

Ces structures sont utiles pour fabriquer des emballages souples ou rigides tels que des sachets, des bouteilles, des containers, des tubes, des tuyaux coextrudés ou des réservoirs d'essence multicouche pour véhicules.

L'invention a pour objet l'utilisation d'un liant de coextrusion comprenant :
- 5 à 35 % en poids d'un polymère (A) lui-même constitué d'un mélange de 80 à 20 % en poids d'un polyéthylène métallocène (A1) de densité comprise entre 0.863 et 0.915 g/cm³ et de 20 à 80 % en poids d'un polyéthylène LLDPE (A2) non métallocène de densité comprise entre 0,900 et 0,950 g/cm³, le mélange de polymères (A1) et (A2) étant cogreffé par un monomère de greffage choisi parmi les acides carboxyliques insaturés et leurs dérivés, la teneur du monomère de greffage dans ledit mélange étant comprise entre 30 et 100 000 ppm, de préférence entre 600 et 5000 ppm ;
- 95 à 65 % en poids de polyéthylène métallocène (B) homo ou copolymère dont le comonomère comprend 3 à 20 atomes de carbone, de préférence 4 à 8 atomes de carbone, dont la densité est comprise entre 0,863 et 0,915 g/cm³ et dont le MFI, indice de fluidité à l'état fondu mesuré sous 2,16kg à 190°C selon la norme ASTMD 1238, est compris entre 0.5 et 30, de préférence entre 3 et 15 g/10 min ;
le total faisant 100 %, le mélange de (A) et (B) étant tel que son MFI est compris entre 0,1 et 15, de préférence entre 1 et 13 g /10 min, pour l'obtention d'une couche (L) comprenant le liant dans une structure multicouche comprenant une couche (E) attachée à l'une des deux faces de ladite couche (L), ladite couche (E) étant une couche de polyester, caractérisée en ce que la force d'adhésion dudit liant est augmentée de 5 à 50 % entre l'instant t=0, correspondant à son application immédiatement après son extrusion et l'instant t=8 jours.

Selon un mode de réalisation le liant est caractérisé en ce que le monomère de greffage est l'anhydride maléique.

Selon un mode de réalisation le liant est caractérisé en ce qu'il comprend en plus un copolymère (C) éthylèné/(méth)acrylate d'alkyle.

Selon un mode de réalisation le liant est caractérisé en ce que le MFI de (A) est compris entre 0,1 et 5 g/10 min (ASTMD 1238 à 190°C sous 2,16 kg).

L'invention a également pour objet une structure multicouche caractérisée en ce qu'elle comprend une couche (L) comprenant le liant précédemment décrit et une couche (E) directement attachée à l'une des deux faces de ladite couche (L), ladite couche (E) étant une couche de polyester.

Selon un mode de réalisation, la structure multicouche est caractérisée en ce qu'une couche (F) est directement attachée à la seconde face de la couche (L), la couche (L) étant prise en sandwich entre les couches (E) et (F), ladite couche (F) étant soit une couche de polymère choisi parmi le groupe des polyamides, des copolymères saponifiés d'éthylène et d'acétate de vinyle (EVOH), des polyoléfines, des polyesters soit une couche métallique.

L'invention concerne de plus un objet comprenant une structure décrite ci-dessus ainsi que l'utilisation de la structure pour fabriquer des films ou des feuilles.

L'invention va maintenant être décrite en détails.

S'agissant de (A1), on désigne par polyéthylène métallocène les polymères obtenus par copolymérisation d'éthylène et d'alpha oléfine ayant de 3 à 30 atomes de carbone, de préférence de 3 à 8 atomes de carbone, telle que par exemple propylène, butène, pentène, héxène ou octène en présence d'un catalyseur monosite.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

Un catalyseur monosite est constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport *M̅w̅* / *M̅n̅* < 3 et de préférence < 2 dans lequel *M̅w̅* et *M̅n̅* désignent respectivement la masse molaire moyenne en poids et la masse molaire moyenne en nombre. On désigne aussi par polyéthylène métallocène ceux ayant un MFR ( Melt Flow Ratio ou rapport d'indice de fluidité) inférieur à 6,53 et un rapport *M̅w̅* / *M̅n̅* supérieur à MFR moins 4,63. MFR désigne le rapport du MFI₁₀ (MFI sous une charge de 10 Kg) au MFI₂ (MFI sous une charge de 2,16 Kg). D'autres polyéthylènes métallocènes sont définis par un MFR égal ou supérieur à 6,13 et un rapport *M̅w̅* / *M̅n̅* inférieur ou égal à MFR moins 4,63.

Avantageusement la densité de (A1) est comprise entre 0,863 et 0,915. Le MFI du PEm (A1) est compris entre 0,5 et 30 g/10min (selon la norme ASTM D1238 à 190 °C sous 2,16 Kg).

S'agissant de (A2), le polymère (A2) est un copolymère de l'éthylène et d'une alpha-oléfine de type LLDPE (polyéthylène basse densité linéaire) et n'est pas de type métallocène. Les alpha-oléfines ont avantageusement de 3 à 30 atomes de carbone. La liste de ces alpha-oléfines a déjà été donnée plus haut. De préférence, ce sont des alpha-oléfines ayant de 3 à 8 atomes de carbone.

La densité de (A2) est avantageusement comprise entre 0,900 et 0,950.

Le MFI ou indice de fluidité à l'état fondu de (A2) est compris entre 0,1 et 8 g/10 min (selon la norme ASTM D1238 à 190 °C sous 2,16 Kg).

Le mélange des polymères (A1) et (A2) est greffé avec un monomère de greffage, c'est-à-dire que les polymères (A1) et (A2) sont cogreffés. Le monomère de greffage est choisi parmi les acides carboxyliques insaturés ou leurs dérivés fonctionnels.

Des exemples d'acides carboxyliques insaturés sont ceux ayant 2 à 20 atomes de carbone tels que les acides acryliques, méthacryliques, maléique, fumarique et itaconique. Les dérivés fonctionnels de ces acides carboxyliques insaturés comprennent les anhydrides, les dérivés esters, les dérivés amides, les dérivés imides et les sels métalliques (tels que les sels de métaux alcalins) de ces acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides et leurs dérivés fonctionnels maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1) hept-5-ène-2,3-dicarboxylique, et x-méthylbicyclo(2,2,1) hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de polymères (A1) et (A2). Le mélange peut contenir les additifs utilisés habituellement lors de la mise en oeuvre des polyoléfines à des teneurs comprises entre 10 ppm et 50 000 ppm, tels que les antioxydants à base de molécules phénoliques substituées, les agents de protections UV, les agents de mise en oeuvre tels que les amides gras, l'acide stéarique et ses sels, les polymères fluorés connus comme agents pour éviter les défauts d'extrusion, les agents anti- buée à base d'amines, les agents anti-bldquants tels que la silice ou le talc, les mélanges maîtres avec colorants et les agents nucléants entre autres.

Par exemple, le greffage peut être réalisé en chauffant les polymères (A1) et (A2) à température élevée, environ 150° à environ 300°C, en présence ou en absence d'un solvant avec ou sans initiateur de radicaux. Des solvants appropriés pouvant être utilisés dans cette réaction sont le benzène, le toluène, le xylène, le chlorobenzène, le cumène entre autres. Des initiateurs de radicaux appropriés qui peuvent être utilisés comprennent le t-butyl-hydroperoxyde, cumène-hydroperoxyde, di-iso-propyl-benzène-hydroperoxyde, di-t-butyl-peroxyde, t-butyl-cumyl-peroxyde, dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde et méthyl-éthyl-cétone-peroxyde.

Dans le mélange de polymères (A1) et (A2) modifié par greffage obtenu de la façon susmentionnée, la quantité du monomère de greffage peut être choisie d'une façon appropriée mais elle est de préférence de 0,01 à 10 % en poids, c'est à dire de préférence de 600 ppm à 5000 ppm, par rapport au poids de (A1) et (A2) cogreffés.

La quantité du monomère greffé est déterminée par dosage des fonctions succiniques par spectroscopie IRTF. Le MFI ou indice d'écoulement à l'état fondu de (A), c'est-à-dire du mélange de (A1) et (A2) ayant été cogreffés, est compris entre 0,1 et 15 g/10 min (ASTM D 1238-190°C-2,16 kg), avantageusement entre 0,1 et 5 g/10min, de préférence entre 0,1 et 3 g/10 min.

Concernant le polyéthylène (B), il s'agit d'un polyéthylène métallocène homopolymère ou copolymère avec dans ce cas un comonomère choisi parmi les alpha-oléfines ayant de 3 à 20 atomes de carbone, de préférence de 4 à 8 atomes de carbone.

Des exemples d'alpha oléfines ayant de 3 à 20 atomes de carbone comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène. Ces alpha oléfines peuvent être utilisées seules ou en mélange de deux ou de plus de deux.

Le polyéthylène métallocène (B) a une densité comprise entre 0,863 et 0,915 et un MFI (mesuré selon la norme ASTM D 1238 à 190°C sous 2,16g) compris entre 0,5 et 30 g/10min, de préférence entre 3 et 15 g/10min.

Le MFI du liant de coextrusion est compris entre 0,1 et 15g/10min, de préférence entre 1 et 13g/10min (ASTMD 1238-190°C-2,16kg).

Les liants de l'invention sont utiles pour les structures multicouches comme par exemple les films, les feuilles, les tubes et les corps creux.

La structure multicouche de la présente invention comprend une couche (L) comprenant le liant précédemment décrit et une couche (E) directement attachée à une première face de ladite couche (L). La couche (E) est une couche des polyesters.

Une couche (F) peut également être directement attachée à la seconde face de la couche (L), la couche (L) étant prise en sandwich entre les couches (E) et (F), ladite couche (F) étant soit une couche de polymère choisi parmi le groupe des polyamides, des copolymères saponifiés d'éthylène et d'acétate de vinyle (EVOH) soit une couche métallique.

Mais la structure multicouche peut également comprendre une couche (L) comprenant le liant pris en sandwich entre deux couches (F).

On peut à titre d'exemple énumérer les structures suivantes : PA désignant le polyamide, L le liant, PE le polyéthylène, PET le polyéthylène téréphtalate et EVOH le copolymère d'éthylène et d'acétate de vinyle saponifié :
■ Structures de type (E) /couche(L)/ couche (E) et couche (F) / couche (L) / couche (F) : PET/L/PET.

Plus spécifiquement, les polyamides sont synthétiques à longue chaîne ayant des motifs structurels du groupe amide dans la chaîne principale, tels que le PA-6, PA-6,6, PA-6,10, PA-11, PA-6/6,6 et le PA-12.

Les copolymères saponifiés d'éthylène et d'acétate de vinyle ont un degré de saponification d'environ 90 à 100 % en moles et sont obtenus en saponifiant un copolymère éthylène/acétate de vinyle ayant une teneur en éthylène d'environ 15 à environ 60 % en moles.

Les polyesters sont homo ou copolymères. Les homopolyesters peuvent être pris dans le groupe du polyéthylène-téréphtalate, du polybutylène-téréphtalate, du polyéthylène naphténate ou encore des polyesters aromatiques comme les cristaux liquides polymères.

Des copolyesters appropriés, utiles dans l'invention, peuvent être formés à partir d'acides dicarboxylique aromatiques, d'esters d'acides dicarboxyliques, d'anhydrides d'esters dicarboxyliques, de glycols ou de leurs mélanges. Sont également appropriés des copolyester partiellement aromatiques formés d'unités répétitives comprenant l'acide terephtalique, le dimethyl terephtalate, l'acide isophtalique, le dimethyl isophtalate, le dimethyl-2,6 naphthalenedicarboxylate, l'acide 2,6-naphthalenedicarboxylique, les acides dioxydoacétiques 1,2-, 1,3- et 1,4-phénylène, l'éthylène glycol, le diethylene glycol, le 1,4-cyclohexanedimethanol, le 1,4-butanediol ou leurs mélanges.

De préférence, la structure des polyesters comprend des unités répétitives comprenant l'acide terephtalique, le dimethyl terephtalate, l'acide isophtalique, le dimethyl isophtalate, et/ou le dimethyl-2,6-naphtalenedicarboxylate. L'acide dicarboxylique du polyester peut être modifié avec un ou des acides dicarboxyliques différents (de préférence jusqu'à environ 20 % en môle). De tels acides dicarboxyliques comprennent des acides dicarboxyliques aromatiques ayant de préférence 8 à 14 atomes de carbone, des acides dicarboxyliques aliphatiques ayant de préférence 4 à 12 atomes de carbone ou des acides dicarboxyliques cycloaliphatiques ayant de préférence 8 à 12 atomes de carbone. Les exemples d'acides dicarboxyliques sont : l'acide terephtalique, l'acide phtalique, l'acide isophtalique, l'acide naphtalene-2,6-dicarboxylique, l'acide cyclohexanedicarboxylique, l'acide cyclohexanediacetique, l'acide diphenyl-4,4'-dicarboxylique, l'acide succinique, l'acide glutarique, l'acide adipique, l'acide azelaique, l'acide sebacique ou leurs mélanges.

De plus, le glycol peut être modifié avec un ou des diols différents autres que l'éthylène glycol (de préférence jusqu'à environ 20 % en môle). De tels diols comprennent: les diols cycloaliphatiques ayant de préférence 6 à 20 atomes de carbone ou les diols aliphatiques ayant de préférence 25 à 20 atomes de carbone. Les exemples de tels diols comprennent : le diethylene glycol, le triethylene glycol, le 1,4-cyclohexanedimethanol, le propane-1,3-diol, le butane-1,4-diol, le pentane-1,5-diol, l'hexane-1,6-diol, le 3-methylpentane-(2,4)-diol, le 2-methylpentane-(1,4) diol, le 2,2,4-trimethylpentane-(1,3)-diol, le 2-ethylhexane-(1,3)-diol, le 2,2-diethylpropane-(1,3)-diol, l'hexane-(1,3)-diol, le 1,4-di-(hydroxyethoxy)benzene, le 2,2-bis-(4-hydroxycyclohexyl)propane, le 2,4-dihydroxy-1,1,3,3-tetramethyl-cyclobutane, le 2,2-bis-(3-hydroxyethoxyphenyl)propane, le 2-bis-(4-hydroxypropoxyphenyl)propane, l'hydroxyethyl resorcinol ou leurs mélanges. Les polyesters peuvent être préparés avec deux ou plus de deux des diols précédents.

La couche métallique peut être par exemple une pellicule ou une feuille d'un métal tel que l'aluminium, le fer, le cuivre, l'étain et le nickel ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention.

Les compositions formant les différentes couches des structures de l'invention peuvent contenir des additifs tels que des charges, des stabilisants, des agents glissants, des agents antistatiques, des ignifugeants.

Les structures de l'invention peuvent être fabriquées par des procédés connus de coextrusion, d'extrusion soufflage, de thermoformage, de couchage, de lamination de la technique des thermoplastiques.

Le **tableau 1** ci -dessous regroupe les compositions de liant selon l'invention (Ex 1-4) et les comparatifs (Comp 1-7).

Le **tableau 2** ci-dessous regroupe les forces de pelage F en N/15mm à t0 (temps = 0, lorsque le liant vient juste d'être extrudé et appliqué sur l'éprouvette) et à t8 (correspondant à temps = 8 jours). Les films utilisés pour ces tests sont des films coextrudés constitués de 3 couches pour le cas 1 : couche PET / couche liant (L) / couche PE d'épaisseur respectivement 150/30/350 en µm et de films constitués de 5 couches pour les cas 2 et 3 : couche PET / couche liant (L) / couche EVOH / couche liant (L) / couche PE d'épaisseur respectivement 150/30/20/30/300 en µm.

Les tests de pelage ont été réalisés à une température T de 25°C et à une vitesse de pelage de 200 mm/min. On a utilisé pour réaliser ces films le PET VORIDIAN 9921W© de EASTMAN, le LDPE LAQTENE LD0304© d'ATOFINA et l'EVOH à 38 % d'éthylène SOARNOL® de NIPPON GOHSEI. Le signe σ correspond aux écart-type.

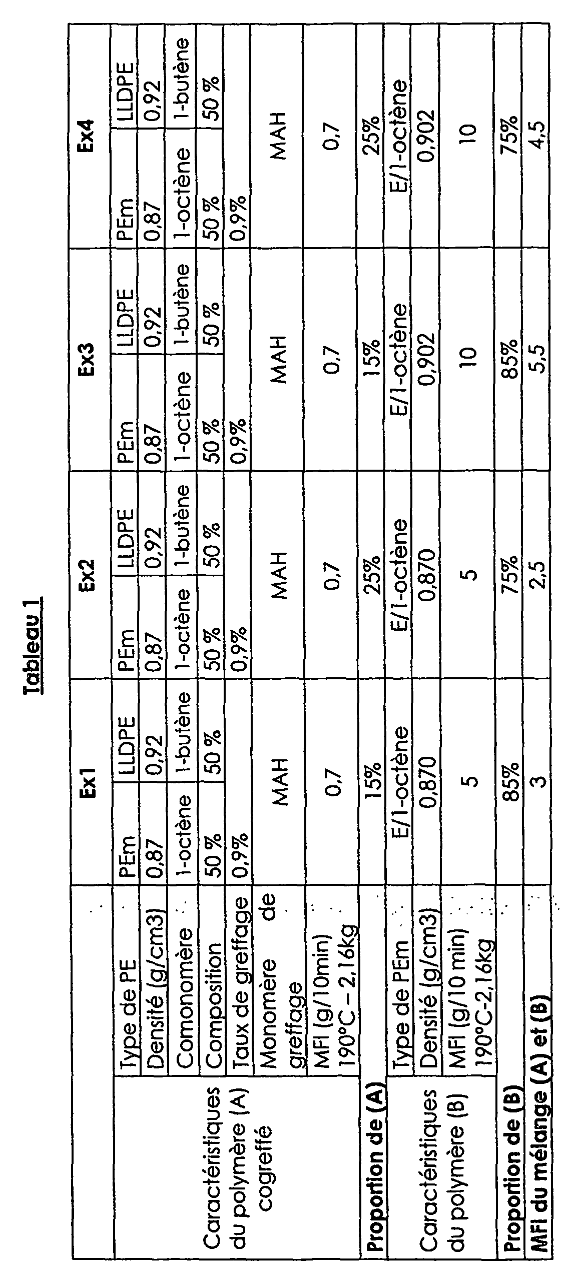

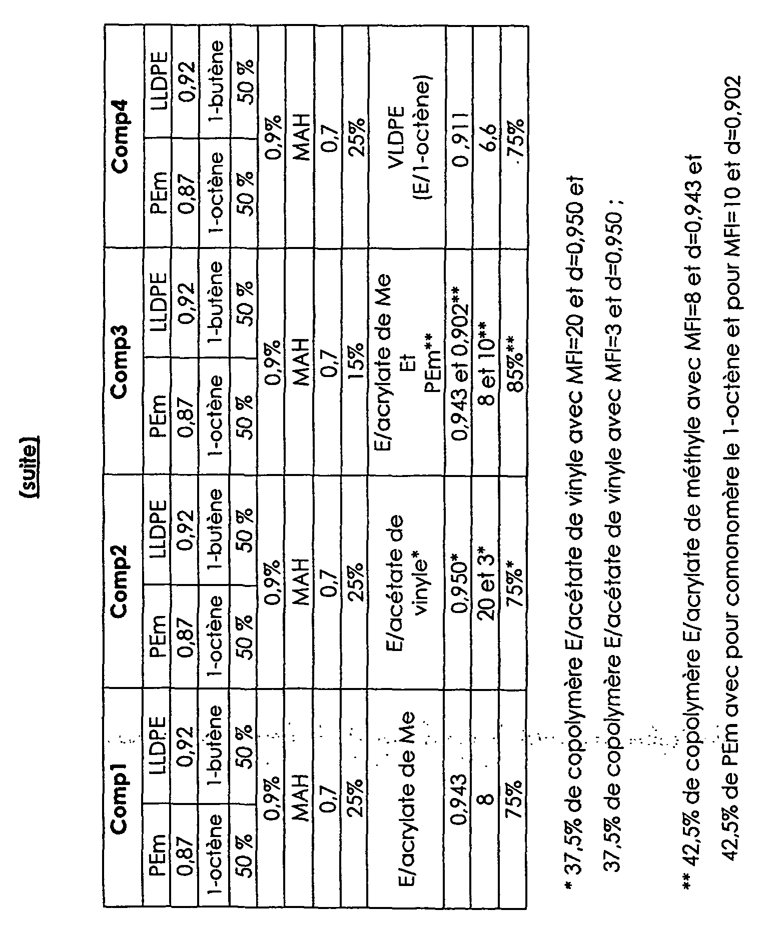

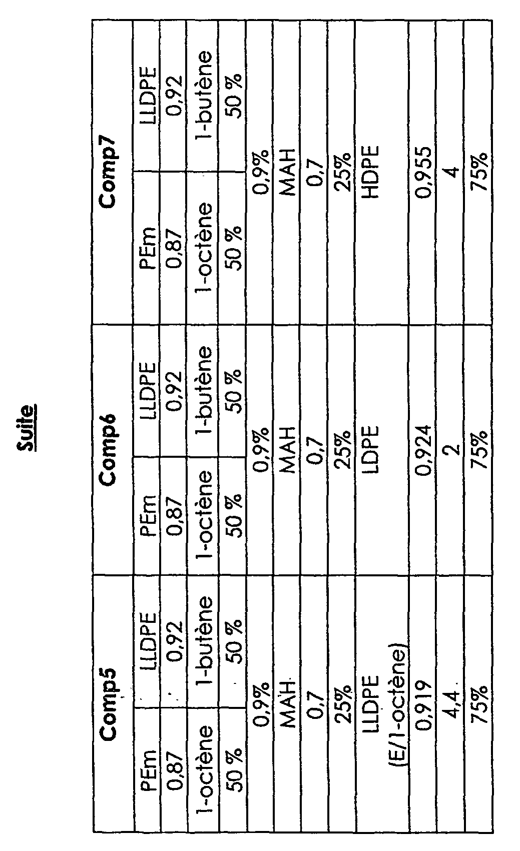

**Tableau 2**

| | **CAS 1** | | | | **CAS 2** | | | | **CAS 3** | | | |
|---|---|---|---|---|---|---|---|---|---|---|---|---|
| | F à t0 en N/15mm | σ | F à t8 en N/15mm | σ | F à t0 en N/15mm | σ | F à t8 en N/15mm | σ | F à t0 en N/15mm | σ | F à t8 en N/15mm | σ |
| **Ex1** | 13.4 | 0.5 | 16.7 | 0.7 | 8.2 | 0.2 | 10.7 | 0.1 | - | - | - | - |
| **Ex2** | 14.2 | 0.5 | 17.8 | 0.4 | 10.6 | 0.3 | 12.8 | 0.4 | - | - | - | - |
| **Ex3** | 11.6 | 0.6 | 15.1 | 3.4 | 8.5 | 0.1 | 10.1 | 0.2 | - | - | - | - |
| **Ex4** | 12.5 | 0.8 | 20.1 | 1.8 | 10.4 | 0.2 | 12.1 | 0.3 | - | - | - | - |
| **Comp1** | 6 | 0.5 | 5.6 | 0.4 | - | - | - | - | 5.8 | 0.5 | 5.2 | 0.4 |
| **Comp2** | 6.1 | 0.5 | 6.6 | 0.9 | - | - | - | - | 5.7 | 0.2 | 5.8 | 0.4 |
| **Comp3** | 6.5 | 0.9 | 6.8 | 0.8 | - | - | - | - | 6.2 | 0.9 | 6.1 | 0.8 |
| **Comp4** | 4.4 | 2.1 | 1.3 | 0.2 | - | - | - | - | 4.1 | 1 | 2.1 | 0.2 |
| **Comp5** | 3.2 | 0.3 | 1.2 | 0.2 | - | - | - | - | 3.2 | 0.1 | 1.4 | 0.2 |
| **Comp6** | 2.6 | 0.2 | 1 | 0.1 | - | - | - | - | 2.7 | 0.2 | 1.2 | 0.1 |
| **Comp7** | 1.2 | 0.1 | 0.5 | 0.1 | - | - | - | - | 1 | 0.1 | 0.6 | 0.1 |

| | | | | | | | | | | | | |
|---|---|---|---|---|---|---|---|---|---|---|---|---|
| Cas 1 : rupture entre la couche de PET et de liant (L) Cas 2 : rupture entre la couche d'EVOH et de liant (L) Cas 3 : rupture entre le couche de PET et de liant (L) | | | | | | | | | | | | |

## Revendications

1. Utilisation d'un liant de coextrusion comprenant :
- 5 à 35 % en poids d'un polymère (A) lui-même constitué d'un mélange de 80 à 20 % en poids d'un polyéthylène métallocène (A1) de densité comprise entre 0,863 et 0,915 g/cm³ et de 20 à 80 % en poids d'un polyéthylène LLDPE (A2) non métallocène de densité comprise entre 0,900 et 0,950 g/cm³, le mélange de polymères (A1) et (A2) étant cogreffé par un monomère de greffage choisi parmi les acides carboxyliques insaturés et leurs dérivés, la teneur du monomère de greffage dans ledit mélange étant comprise entre 30 et 100 000 ppm, de préférence entre 600 et 5000 ppm ;
- 95 à 65 % en poids de polyéthylène métallocène (B) homo ou copolymère dont le comonomère comprend 3 à 20 atomes de carbone, de préférence 4 à 8 atomes de carbone, dont la densité est comprise entre 0,863 et 0,915 g/cm³ et dont le MFI, indice de fluidité à l'état fondu mesuré sous 2,16kg à 190°C selon la norme ASTMD 1238, est compris entre 0,5 et 30, de préférence entre 3 et 15 g/10 min ;
le total faisant 100 %, le mélange de (A) et (B) étant tel que son MFI est compris entre 0,1 et 15, de préférence entre 1 et 13 g /10 min, pour l'obtention d'une couche (L) comprenant le liant dans une structure multicouche comprenant une couche (E) attachée à l'une des deux faces de ladite couche (L), ladite couche (E) étant une couche de polyester, **caractérisée en ce que** la force d'adhésion dudit liant est augmentée de 5 à 50 % entre l'instant t=0, correspondant à son application immédiatement après son extrusion et l'instant t=8 jours.

2. Utilisation selon la revendication 1, **caractérisée en ce qu'** une couche (F) est directement attachée à la seconde face de la couche (L), la couche (L) étant prise en sandwich entre les couches (E) et (F), ladite couche (F) étant soit une couche de polymère choisi parmi le groupe des polyamides, des copolymères saponifiés d'éthylène et d'acétate de vinyle (EVOH), des polyoléfines, des polyesters soit une couche métallique.

3. Utilisation selon la revendication 2, **caractérisée en ce que** la couche (E) est une couche de polyester copolymère et la couche (F) est une couche d'EVOH.

4. Utilisation selon l'une quelconque des revendications précédentes, **caractérisé en ce que** le monomère de greffage est l'anhydride maléique.

5. Utilisation selon l'une des revendications précédentes, **caractérisé en ce que** le MFI de (A) est compris entre 0,1 et 5 g/10 min (ASTMD 1238 à 190°C sous 2,16 kg).

6. Structure multicouche obtenue selon l'une des revendications 1 à 5.

7. Objet comprenant une structure la revendication 6.

8. Objet selon la revendication 7 **caractérisé en ce que** c'est un sachet, une bouteille, un container, un tube ou un tuyau.

9. Utilisation de la structure selon la revendication 6 pour fabriquer des films ou des feuilles.

## Claims

1. Use of a coextrusion tie which comprises:
- 5 to 35% by weight of a polymer (A) itself composed of a blend of 80 to 20% by weight of a metallocene polyethylene (A1) with a density of between 0.863 and 0.915 g/cm³ and of 20 to 80% by weight of a non-metallocene LLDPE polyethylene (A2) with a density of between 0.900 and 0.950 g/cm³, the blend of polymers (A1) and (A2) being cografted by a grafting monomer chosen from unsaturated carboxylic acids and their derivatives, the content of the grafting monomer in said blend being between 30 and 100 000 ppm, preferably between 600 and 5 000 ppm;
- 95 to 65% by weight of metallocene polyethylene (B) homo- or copolymer, the comonomer of which comprises 3 to 20 carbon atoms, preferably 4 to 8 carbon atoms, the density of which is between 0.863 and 0.915 g/cm³ and the MFI, melt flow index, of which, measured under 2.16 kg at 190°C according to Standard ASTMD 1238, is between 0.5 and 30, preferably between 3 and 15, g/10 min;
the total forming 100%, the blend of (A) and (B) being such that its MFI is between 0.1 and 15, preferably between 1 and 13, g/10 min, to obtain a layer (L) comprising the tie in a multilayer structure comprising a layer (E) attached to one of the two faces of said layer (L), said layer (E) being a polyester layer, **characterized in that** the adhesive strength of said tie is increased by 5 to 50% between the time t=0 corresponding to its application immediately after its extrusion and the time t=8 days.

2. Use according to Claim 1, **characterized in that** a layer (F) is directly attached to the second face of the layer (L), the layer (L) being sandwiched between the layers (E) and (F), said layer (F) being either a polymer layer, the polymer being chosen from the group of the polyamides, saponified copolymers of ethylene and of vinyl acetate (EVOH), polyolefins and polyesters, or a metal layer.

3. Use according to Claim 2, **characterized in that** the layer (E) is a polyester copolymer layer and the layer (F) is an EVOH layer.

4. Use according to any one of the preceding claims, **characterized in that** the grafting monomer is maleic anhydride.

5. Use according to one of the preceding claims, **characterized in that** the MFI of (A) is between 0.1 and 5 g/10 min (ASTMD 1238 at 190°C under 2.16 kg).

6. Multilayer structure obtained according to one of Claims 1 to 5.

7. Object comprising a structure according to Claim 6.

8. Object according to Claim 7, **characterized in that** it is a bag, a bottle, a container, a pipe or a hose.

9. Use of the structure according to Claim 6 for manufacturing films or sheets.

## Patentansprüche

1. Verwendung eines Coextrusionsbindemittels, umfassend:
- 5 bis 35 Gewichts% eines Polymers (A), das seinerseits aus einer Mischung von 80 bis 20 Gewichts% eines Metallocen-Polyethylens (A1) mit einer Dichte von 0,863 bis 0, 915 g/cm³ und 20 bis 80 Gewichts% eines Nichtmetallocen-LLDPE-Polyethylens (A2) mit einer Dichte von 0,900 bis 0,950 g/cm³ besteht, wobei die Mischung der Polymere (A1) und (A2) gemeinsam eine Pfropfung mit einem Pfropfmonomer erfahren hat, welches aus den ungesättigten Carbonsäuren und deren Derivaten ausgewählt ist, wobei der Gehalt des Pfropfmonomers in der Mischung 30 bis 100.000 ppm, vorzugsweise 600 bis 5.000 ppm, beträgt;
- 95 bis 65 Gewichts% eines Homo- oder Copolymers eines Metallocen-Polyethylens (B), dessen Comonomer 3 bis 20, vorzugsweise 4 bis 8 Kohlenstoffatome Kohlenstoffatome umfasst, wobei dessen Dichte 0,863 bis 0,915 g/cm³ beträgt und dessen Schmelzindex (MFI), welcher gemäß der Norm ASTMD 1238 bei 2,16 kg und 190 °C gemessen wird, 0,5 bis 30, vorzugsweise 3 bis 15 g/10 min beträgt;
wobei die Summe 100 % ergibt, wobei die Mischung aus (A) und (B) derart beschaffen ist, dass ihr MFI 0,1 bis 15, vorzugsweise 1 bis 13 g/10 min beträgt, um eine Schicht (L) zu erhalten, die das Bindemittel in einer mehrschichtigen Struktur umfasst, welche eine Schicht (E) umfasst, die an einer der beiden Flächen der Schicht (L) befestigt ist, wobei die Schicht (E) eine Polyesterschicht ist, **dadurch gekennzeichnet, dass** die Klebekraft des Bindemittels zwischen dem Zeitpunkt t = 0, der seinem Aufbringen unmittelbar nach seiner Extrusion entspricht, und dem Zeitpunkt t = 8 Tage um 5 bis 50 % zunimmt.

2. Verwendung nach Anspruch 1, **dadurch gekennzeichnet, dass** eine Schicht (F) direkt an der zweiten Fläche der Schicht (L) befestigt ist, wobei die Schicht (L) eine Sandwich-Lage zwischen den Schichten (E) und (F) bildet, wobei die Schicht (F) entweder eine Polymerschicht, die aus der Gruppe der Polyamide, der verseiften Ethylen-Vinylacetat-Copolymere (EVOH), der Polyolefine und der Polyester ausgewählt ist, oder eine Metallschicht ist.

3. Verwendung nach Anspruch 2, **dadurch gekennzeichnet, dass** die Schicht (E) eine Schicht aus Polyester-Copolymer ist und die Schicht (F) eine EVOH-Schicht ist.

4. Verwendung nach einem beliebigen der vorhergehenden Ansprüche, **dadurch gekennzeichnet, dass** es sich bei dem Pfropfmonomer um Maleinsäureanhydrid handelt.

5. Verwendung gemäß einem der vorhergehenden Ansprüche, **dadurch gekennzeichnet, dass** der MFI von (A) 0,1 bis 5 g/10 min (ASTMD 1238 bei 190°C und 2,16 kg) beträgt.

6. Mehrschichtige Struktur, die gemäß einem der Ansprüche 1 bis 5 erhalten wird.

7. Gegenstand, der eine Struktur des Anspruchs 6 umfasst.

8. Gegenstand nach Anspruch 7, **dadurch gekennzeichnet, dass** es sich um einen Beutel, eine Flasche, einen Behälter, eine Röhre oder einen Schlauch handelt.

9. Verwendung der Struktur nach Anspruch 6 zur Herstellung von Filmen oder Folien.
